# EUROPÄISCHE PATENTSCHRIFT

(11) **EP 2 722 692 B1**
(45) Veröffentlichungstag und Bekanntmachung des Hinweises auf die Patenterteilung: **12.04.2017**
(21) Anmeldenummer: 13164540.0
(22) Anmeldetag: 19.04.2013
(51) Int. Cl.: G01V 8/10

(54) **Sensor**
Sensor
Capteur

(30) Priorität: 19.10.2012 DE 102012109973
(43) Veröffentlichungstag der Anmeldung: 23.04.2014
(73) Patentinhaber: SICK AG, 79183 Waldkirch (DE)
(72) Erfinder: Wüstefeld, Martin, 79350 Sexau (DE); Henkel, Olaf, 79276 Reute (DE)
(74) Vertreter: Ludewigt, Christoph

(56) Entgegenhaltungen:
- EP-A1- 2 053 428

## Beschreibung

Die Erfindung betrifft einen Sensor, insbesondere einen optoelektronischen Sensor, insbesondere eine Lichtschranke nach dem Oberbegriff des Anspruchs 1.

Sensoren bzw. Lichtgitter werden in großem Umfang für die Erkennung und Vermessung von Gegenständen auf Förderbahnen, zur Gepäckkontrolle auf Förderbändern, zur Türsteuerung in Aufzügen, für den Hand- oder Körperschutz bei Arbeitsmaschinen, für die Zugangskontrolle von Personen und Fahrzeugen usw. verwendet. Die Lichtgitter bestehen aus in einem leistenförmigen Gehäuse beabstandet angeordneten Sende-Einheiten und in einem leistenförmigen Gehäuse entsprechend beabstandet angeordneten Empfangs-Einheiten. Die Sende-Einheiten senden Lichtstrahlen, im Allgemeinen Infrarot-Licht, aus, welches auf die Empfangs-Einheiten auftrifft. Die Unterbrechung der Lichtstrahlen wird detektiert und ausgewertet.

Die Sende-Einheiten und die Empfangs-Einheiten bestehen jeweils aus einem optoelektronischen Element und einem in Strahlrichtung von diesem beabstandeten optischen Funktionselement. Bei der Sende-Einheit sendet ein optoelektronischer Wandler Licht aus, welches durch das optische Funktionselement, beispielsweise eine Linse, auf die entsprechende Empfangs-Einheit gebündelt wird. Die Empfangs-Einheit weist ein entsprechendes optisches Funktionselement auf, welches das Licht auf einem optoelektronischen Wandler sammelt.

Die bekannten optoelektronischen Sensoreinrichtungen arbeiten dabei nach dem Einwegprinzip, d. h. in einem ersten Gehäuse auf einer Seite der Überwachungsstrecke bzw. Überwachungsfläche sind ein oder mehrere Lichtsender angeordnet und auf der gegenüberliegenden Seite der Überwachungsstrecke bzw. Überwachungsfläche befinden sich in einem zweiten Gehäuse ein oder mehrere Lichtempfänger. Der bzw. die Lichtsender kommunizieren dabei nach einem genauen vorgegebenen Timing mit dem bzw. den Lichtempfängern, so dass jeweils Paare von Lichtsendern/Lichtempfängern aktiv sind.

Der Begriff "Licht" ist hierbei nicht auf das sichtbare Licht beschränkt. Unter dem Begriff "Licht" sind ganz allgemein jene elektromagnetischen Strahlen, also vom UV-Licht über den sichtbaren Bereich bis zum IR-Licht, zu verstehen, die üblicherweise für den Betrieb von Lichtschranken und Lichtgittern eingesetzt werden.

Speziell dann, wenn diese optoelektronischen Sensoreinrichtungen eine hohe Sicherheitsanforderung erfüllen müssen oder bei messenden Lichtgittern für die Automatisierungstechnik hohe Anforderungen an eine einwandfreie Erkennung gestellt werden, ist es notwendig, dass die Überwachungsaufgabe nicht durch unerwünschte Nebeneffekte außer Kraft gesetzt wird. Eine mögliche Gefahr einer derartigen unerwünschten Nebenwirkung besteht darin, dass ein merklicher Anteil des gerade aktiven Lichtstrahles eines Lichtsender-/Lichtempfänger-Paares um ein Objekt, das eigentlich durch Unterbrechung des Lichtstrahles erkannt werden sollte, den Empfänger durch Umspiegelung erreicht. Das hat dann zur Folge, dass dieses Objekt nicht erkannt wird.

Dieses Problem besteht beispielsweise bei langen Überwachungsstrecken, wie beispielsweise an Bahnsteigen mit automatischen Türenzugangssystemen. Bei diesen Türenzugangssystemen ist der gesamte Bahnsteig parallel zum Zug durch eine Wand mit automatischen Türen abgesichert, um Personen vor dem einfahrenden Zug zu schützen. Die Türen des Türenzugangssystems weisen die gleichen Abstände auf wie die Zugtüren auf, so dass die Personen bei Stillstand des Zuges diesen betreten können.

Der Aufwand für den Einsatz von Lichtschranken zur Absicherung und Kontrolle der Türen des Türenzugangssystems ist groß, da für jede Tür eine eigene Lichtschranke vorgesehen werden muss. Mehrere Türen mit einer einzigen Lichtschranke bis hin zur gesamten Zuglänge zu überwachen ist bisher nicht möglich, da die Lichtschranke Personen aufgrund einer Umspiegelung nicht erkennen kann.

Um Umspiegelungen wirksam zu vermeiden, darf der Lichtsender den ausgesandten Lichtstrahl nur innerhalb eines relativ kleinen Sendekegelwinkels aussenden. Gleichermaßen darf der Lichtempfänger auch nur einen Lichtstrahl empfangen, der innerhalb eines relativ kleinen Empfangskegelwinkels auf den Empfänger auftritt. Je kleiner der Winkel ist, desto geringer ist die Umspiegelungsgefahr. Andererseits ist der Justageaufwand beim Ausrichten des Lichtsenders auf den Lichtempfänger entsprechend erschwert und wird vom Anwender nur dann akzeptiert werden, wenn die hohe Sicherheitsanforderung dies zwingend vorschreibt. In all den Anwendungsfällen, wo diese Einschränkungen hinsichtlich der Sende- und Empfangskegelwinkel von den Sicherheitsvorschriften jedoch nicht vorhanden sind, möchte der Anwender, zwecks einfacherer Justage von Lichtsender und Lichtempfänger, größere Sende- und Empfangskegelwinkel haben. Dies bedeutet letztlich, dass nach dem Stand der Technik für derartige Anwendungen alle optoelektronischen Sensoreinrichtungen in wenigstens zwei Varianten am Markt zur Verfügung stehen müssen.

Es ist bekannt bei Sensoren, dass eine Umspiegelung von Objekten zur Nichterkennung der Objekte führt. Das Licht wird dabei durch eine seitlich spiegelnde Fläche um das Objekt herum gespiegelt, wodurch eine gewünschte Lichtstrahlunterbrechung durch das Objekt nicht mehr detektiert werden kann. Folgende Lösungen sind hierzu bekannt:
1. Verringerung der Signalpegel bis der Signalpegel bei freiem Lichtweg wenig oberhalb der Schaltschwelle liegt: Das dann gewünschte Abschalten bei Umspiegelung setzt voraus, dass die dabei übertragene Lichtleistung signifikant kleiner ist als die Lichtleistung bei freiem Lichtweg. Diese Voraussetzung ist nur dann gegeben, wenn eine ausreichend homogene Abstrahl- und Empfangscharakteristik für alle Ausbreitungs- /Empfangsrichtungen vorliegt. Darüber hinaus muss eine ausreichende Leistungsreduktion durch die Umspiegelung erreicht werden. Dies ist bei spiegelnden Flächen, aber auch bei glatten/polierten Flächen, die unter einem flachen Winkel bestrahlt werden, nicht gegeben. Nachteilig ist auch, dass alterungs-, temperaturbedingte oder durch Verschmutzung verursachte Signalreduktion zur Abschaltung führt und damit die Verfügbarkeit des Sensors verringert wird. Insbesondere im Outdoor-Bereich ist bei Regen, Schnee und Nebel von einer hohen Signalschwankung auszugehen. In solchen Anwendungen ist ein Absenken der Signalpegel an die Schaltschwelle nicht möglich.
2. Begrenzung der sende- und empfangsseitigen Feldwinkel. Dies wird im Allgemeinen durch parallele Laserstrahlung erreicht. Ein störungsfreier Betrieb ist bei feldwinkelbegrenzten Sensoren nur bei exakter und dauerhafter Ausrichtung des Senders auf den Empfänger möglich. Besonders bei großen Abständen zwischen Sender und Empfänger oder in vibrationsbehafteten Applikationen kann diese Bedingung nicht erfüllt werden.
3. Einsatz ortsauflösender Sende- oder Empfangselemente. Diese ermöglicht die Richtungserkennung der einfallenden Strahlung, welche für direkte und umspiegelte unterschiedlich ist.

Erfahrungsgemäß gibt es nur sehr wenige Applikationen bzw. Anwendungen, bei welchen Spiegelungseffekte die Gefahr des Nichterkennens bergen. Aus diesem Grund ist die genannte technische Lösung mittels ortsauflösender Sende- oder Empfangselemente wirtschaftlich nicht sinnvoll. Die Lösungen 1 und 2 sind zwar wirtschaftlich umsetzbar, die unzureichende Verfügbarkeit verhindert aber häufig den Einsatz solcher Lösungen.

Aus der DE 103 29 881 A1 ist ein Lichtgitter bekannt mit einer Schlitzblende zur Begrenzung von ausgesandten Lichtstrahlen.

Aus der DE 10 2007 051 681 A1 ist ein Lichtgitter mit einer Multilochblende bekannt zur Begrenzung des Sende- und/oder des Empfangskegelwinkels.

Die DE 20 2007 002 078 U1 offenbart eine Blende für einen optoelektronischen Sensor, wobei die Blende zwischen einem Lichtempfänger, eines aus Lichtsender und Lichtempfänger bestehenden Sensors und einer Stirnseite eines Oberwerkzeuges einer Presse angeordnet ist. Die Blende kann dabei in den Lichtempfänger integriert sein.

Die Aufgabe der vorliegenden Erfindung liegt darin, einen Sensor, insbesondere ein Lichtgitter einzusetzen, wobei spiegelnde Flächen in der Umgebung der Lichtstrahlen des Sensors existieren, ohne dass die spiegelnden Flächen die Funktion des Sensors bzw. Lichtgitters beeinträchtigen. Insbesondere ist es Aufgabe, einen Sensor zur Absicherung eines Türenzugangssystems eines Bahnsteigs bereitzustellen, wobei mit einem einzigen Sensor mehrerer Türen des Türenzugangssystems abgesichert werden können.

Die Aufgabe wird gemäß Anspruch 1 gelöst.

Durch diesen Abstand a der Blende wird die Blende optimal positioniert, abhängig von dem Abstand H der optischen Achse zur reflektierenden Fläche, der halben Öffnung h der Sensoroptik und dem halben Öffnungswinkel α des Sensors.

Sind geometrische Rahmenbedingungen einer Applikation bzw. Anwendung eines Türenzugangssystems bekannt, welche die Gefahr des Nichterkennens durch eine Umspiegelung bzw. Spiegelumlenkung birgt, wird durch geeignete Positionierung der Blende bzw. der angepassten mechanischen Blende in Kombination mit dem Sensor bzw. einem Standardsensor eine zuverlässige Objektdetektion erreicht. Dabei ist entscheidend, dass weder die maximale Reichweite des Systems reduziert wird, noch die Anforderungen an die Ausrichtung des Senders oder Empfängers steigen.

Durch den Einsatz der Blende, bzw einer applikationsangepassten oder anwendungsangepassten Blende zur Vermeidung von Umspiegelungen wird gleichzeitig eine verbesserte Verfügbarkeit gewährleistet.

Gemäß der Erfindung ist die Blende nämlich nicht an dem Sensor befestigt, sondern beabstandet und räumlich getrennt von dem Sensorgehäuse angeordnet. Beispielsweise ist die Blende an unabhängigen Montaghalterungen bzw. an einer anderen Stelle als der Sensor angeordnet. Wird beispielsweise der Sensor ausgerichtet und justiert, wirkt sich diese Ausrichtung und Justage nicht auf die getrennte Blende aus.

Vielmehr wird die Strahlrichtung durch die lichtstrahlbegrenzende Blende und deren Position bestimmt. Erfindungsgemäß ist die Blende nicht konstruktiv mit dem Sensor verbunden. Bei dem Sensor kann es sich beispielsweise um eine Lichtschranke mit einem Sender und einem Empfänger handeln.

Gemäß der Erfindung ist die Blende nur auf einer Seite einer optischen Achse zwischen Sender und Empfänger angeordnet ist, wobei die Lichtstrahlen auf einer Seite der optischen Achse durch die Blende begrenzt werden und auf der gegenüberliegenden Seite nicht begrenzt werden. Die erfindungsgemäße Wirkung der Blende wird dadurch nur auf eine Seite wirkungsvoll, beispielsweise bei einer spiegelnden Wand an der der Sensor angeordnet ist entlang der Lichtstrahlen. Eine solche Anwendung findet sich bei Türenzugangssystemen entlang von U-Bahnhöfen, durch welche die Passanten vor dem einfahrenden Zug geschützt werden. An diesen Türenzugangssystemen sind beispielsweise Sensoren angeordnet, um vor dem Schließen der Türen der Türenzugangssysteme zu prüfen, ob sich noch Personen in den Türen befinden. Um eine Umspiegelung wirksam zu unterdrücken, ist an dem Türenzugangssystem mindestens eine Blende angeordnet.

In Weiterbildung der Erfindung sind neben einer ersten Blende eine zweite oder dritte Blende hintereinander entlang der Lichtstrahlen angeordnet. Durch diese Blenden können gemäß der Erfindung auftretende Umspiegelungen über eine große Strecke verhindert werden. Beispielsweise können bei bereits erwähnten Türenzugangssystemen große Entfernungen auftreten, wenn beispielsweise alle Türen eines kompletten Türenzugangssystems bis zu einer kompletten Zuglänge oder darüber hinaus von einer Lichtschranke über die ganze Länge überwacht werden, wenn mehrere Blenden angeordnet werden.

In Weiterbildung der Erfindung berechnet sich der Abstand b der zweiten Blende von der Sensoroptik nach der Formel b = H +h/tan β mit β = arctan (A + 2h/2a), wobei H den Abstand der optischen Achse zur reflektierenden Fläche bezeichnet, h die halbe Öffnung der Sensoroptik bezeichnet, β den halben Öffnungswinkel nach der ersten Blende bezeichnet, A die Öffnung der ersten Blende bezeichnet und a den Abstand der ersten Blende von der Sensoroptik bezeichnet. Durch diesen Abstand b der zweiten Blende wird die Blende optimal positioniert, abhängig vom dem Abstand H der optischen Achse zur reflektierenden Fläche, der halben Öffnung h der Sensoroptik, dem halben Öffnungswinkel β nach der ersten Blende, der Öffnung A der ersten Blende und dem Abstand a der ersten Blende von der Sensoroptik.

In Weiterbildung der Erfindung berechnet sich der Abstand c der dritten Blende von der Sensoroptik nach der Formel c = H +h/tan γ mit γ = arctan (A + 2h/2b), wobei H den Abstand der optischen Achse zur reflektierenden Fläche bezeichnet, h die halbe Öffnung der Sensoroptik bezeichnet, γ den halben Öffnungswinkel nach der zweiten Blende bezeichnet, A die Öffnung der ersten Blende bezeichnet und b den Abstand der zweiten Blende von der Sensoroptik bezeichnet. Durch diesen Abstand c der dritten Blende, wird die dritte Blende optimal positioniert, abhängig von dem Abstand H der optischen Achse zur reflektierenden Fläche, der halbe Öffnung h der Sensoroptik, dem halben Öffnungswinkel γ nach der zweiten Blende, der Öffnung A der ersten Blende und dem Abstand b der zweiten Blende von der Sensoroptik.

In Weiterbildung der Erfindung ist der Sensor zur Absicherung eines Türenzugangssystems eines Bahnsteigs mit mehreren Türen eingesetzt, wobei mindestens eine Blende an dem Türenzugangssystem zur Begrenzung der Lichtstrahlen angeordnet ist.

Zwischen dem Sender und dem Empfänger des Sensors, entlang der optischen Achse der vorgesehenen gebildeten Lichtschranke befinden sich mehrere Türen entlang des Türenzugangssystems. die durch den Sensor gleichzeitig abgesichert werden.

Gemäß einer besonderen Ausführung ist der Sensor durch ein Lichtgitter gebildet mit einer Mehrzahl von Sendern und/oder Empfängern in dem ersten Sensorgehäuse und einer Mehrzahl von Empfängern und/oder Sendern in dem zweiten Sensorgehäuse. Gemäß der Erfindung kann durch die mindestens eine Blende eine Umspiegelung bei einem Lichtgitter, beispielsweise einem Lichtgitter für die Automatisierungstechnik oder einem Sicherheitslichtgitter, verhindert werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor, insbesondere ein Lichtgitter ohne Blende und mit Blende;
- Figur 2: einen Sensor mit Blende und Mehrfachspiegelung;
- Figur 3: einen Sensor mit langlochförmiger Blende;
- Figur 4: einen Sensor mit einer Blende an einer Seite ;
- Figur 5: einen Sensor mit zwei Blenden hintereinander;
- Figur 5.1: einen Sensor mit drei Blenden hintereinander;
- Figur 6: einen Sensor mit zwei Blenden und mechanischen Barrieren:
- Figur 6.1: einen Sensor mit Blende und Reflexionsfolie;
- Figur 7: ein Türenzugangssystem an einem Bahnsteig;
- Figur 8: ein Türenzugangssystem an einem Bahnsteig in einer Draufsicht;
- Figur 9: ein Sensor mit zwei Blenden bei direkter Sonneneinstrahlung;

In den Figuren sind gleiche Teile mit gleichen Bezugszeichen bezeichnet.

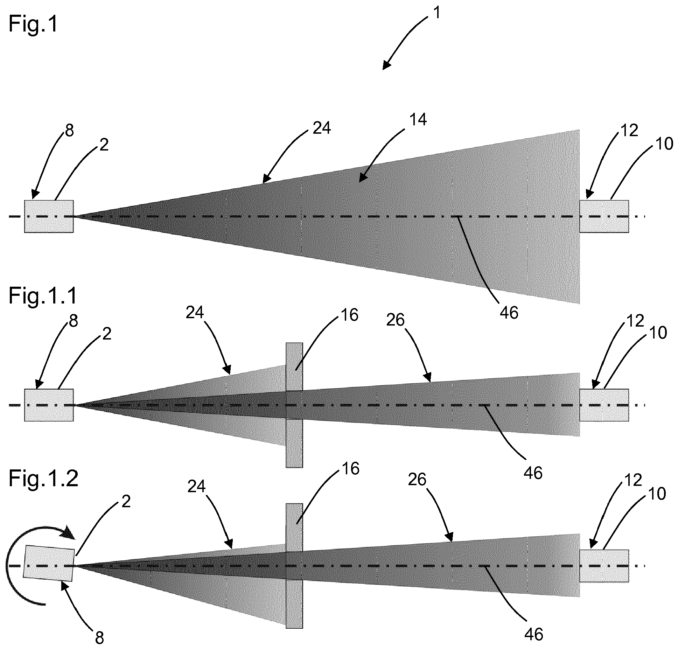

Figur 1 zeigt in der oberen Darstellung einen Sensor 1 bzw. Standardsensor ohne Blenden. Durch Einbringen einer Blende 16, wie in Figur 1.1 dargestellt, bleibt die Bestrahlungsstärke auf dem Empfänger 10 und damit die Reichweite unverändert. Bei dem Sensor 1 handelt es sich beispielsweise um eine Lichtschranke oder ein Lichtgitter. Das Lichtgitter kann beispielsweise als Automatisierungslichtgitter oder als Sicherheitslichtgitter ausgebildet sein. Auch die Lichtschranke kann als Lichtschranke für die Automatisierungstechnik oder als sichere Lichtschranke ausgebildet sein. Sicherheit bedeutet dabei Maschinensicherheit im Sinne von Sicherheitsnormen wie beispielsweise die EN 61496.

Die Figur 1 zeigt einen optoelektronischen Sensor 1, beispielsweise ein Lichtgitter oder eine Lichtschranke mit einem Sender 2 auf einer Seite einer Überwachungsstrecke und einem Empfänger 10 auf der anderen Seite der Überwachungsstrecke. Das aus dem Sender 8 ausgesandte Licht tritt als ein divergentes Lichtbündel 18 mit einem Sendekegelwinkel oder einer Sendekeule 24 aus dem Sender 2 aus. Der Empfänger 10 auf der gegenüberliegenden Seite der Überwachungsstrecke empfängt alles Licht, das innerhalb eines Empfangskegelwinkels auftrifft. Die optische Achse 46 ist exakt ausgerichtet, so dass das divergente Lichtbündel des Senders den Empfänger symmetrisch überleuchtet. Befindet sich ein Objekt zwischen dem Sender 2 und dem Empfänger 10 wird der Lichtweg unterbrochen und von einer Auswerteeinheit, welche die Lichtempfängersignale auswertet, ein entsprechendes Objektfeststellungssignal ausgegeben.

Bei einem Lichtgitter sind in einem ersten Gehäuse mehrere Sender auf einer Seite einer Überwachungsfläche und in einem zweiten Gehäuse mehrere Empfänger auf der anderen Seite der Überwachungsfläche angeordnet. Dabei sendet, in kurzer zeitlicher Folge abwechselnd, immer ein Sender Lichtimpulse auf einen zugehörigen Empfänger paarweise, so dass letztlich nicht nur eine einzelne Linie, sondern eine Fläche streifenförmig überwacht wird. Die einzelnen Sender bzw. Empfänger sind dabei um einen Abstand versetzt in einem jeweiligen Gehäuse angeordnet.

Figur 1.1 zeigt den Sensor 1 aus Figur 1 mit wenigstens einem Sender 2 und einer ersten Sensoroptik in einem ersten Sensorgehäuse 8 und wenigstens einem Empfänger 10 und einer zweiten Sensoroptik in einem zweiten Sensorgehäuse 12, wobei Lichtstrahlen 14 von dem Sender 2 ausgesandt werden und von dem Empfänger 10 empfangen werden, wobei zwischen dem ersten Sensorgehäuse 8 und dem zweiten Sensorgehäuse 12 und beabstandet vom ersten Sensorgehäuse 8 und beabstandet vom zweiten Sensorgehäuse 12 mindestens eine Blende 16 zur Begrenzung der Lichtstrahlen 14 angeordnet ist.

Gemäß Figur 1.2 ist das Sensorgehäuse 8 des Senders 2 verkippt, beispielsweise während einer Justage oder Ausrichtung des Sensors 1. Dabei ist das Sensorverhalten unverändert bei Verkippung/Fehlausrichtung. Dadurch braucht das Sensorgehäuse 8 selbst nicht optimal justiert werden. Weiter ist auch die Strahlstärke bei Dejustage des Sensorgehäuses 8 konstant.

Wie bereits in der Figur 1.1 zu sehen ist, wird durch die Blende 16 ein sendeseitiger Feldwinkel eingeschränkt und damit die Gefahr des Nichterkennens von Objekten durch Umspiegelung verringert.

Bei der Blende 16 handelt es sich beispielsweise um eine applikationsangepasste Blende 16, was bedeutet, dass abhängig von den Randbedingungen geeignete Blenden und Blendenkombinationen gewählt und an die richtige Stelle gesetzt werden.

Gemäß der Erfindung können folgende Blendenparameter variiert werden:

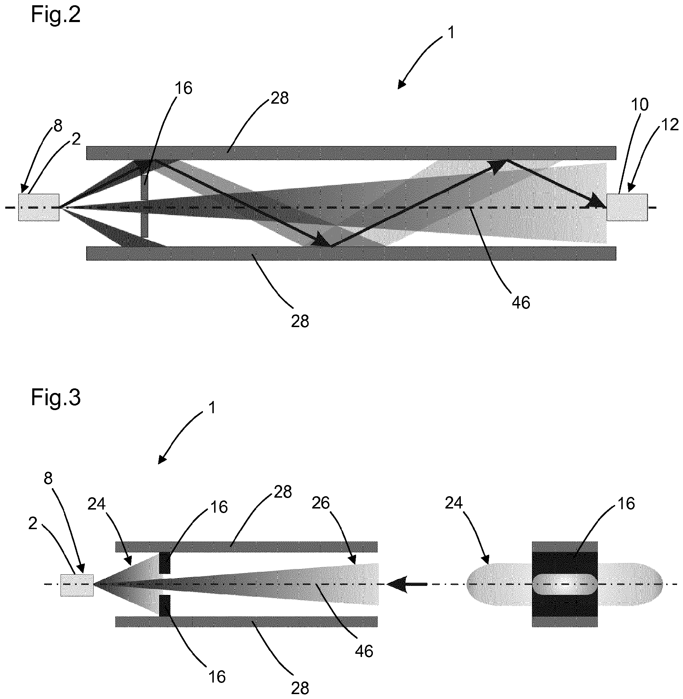

Die Größe und Geometrie der Außenkontur der Blende 16 gemäß Figur 2: Falls eine Umspiegelung durch Mehrfachspiegelumlenkung ausgeschlossen werden kann, können sehr kleine Blenden 16 eingesetzt werden. Wie in Figur 2 dargestellt, kann nur über Mehrfachspiegelung Licht auf den Empfänger 10 gelangen. Durch jede einzelne Spiegelumlenkung wird die Lichtleistung derart verringert, sodass nach mehreren Umlenkungen keine ausreichende Lichtleistung mehr vorhanden ist. D. h das umspiegelte Licht führt nicht zu einer Meldung Lichtweg frei zwischen Sender 2 und Empfänger 10.

Die Größe und Geometrie der Blende 16 gemäß Figur 3:
Ist Position und Lage der spiegelnden Fläche 28 bekannt, kann die Blende 16 so gestaltet werden, dass die Strahlausbreitung nur in definierter Richtung eingeschränkt wird. Damit vereinfacht sich die Ausrichtung der Blende 16. Figur 3 zeigt beispielhaft die Verwendung eines Langlochs als Blende 16. Da seitlich keine spiegelnden Flächen 28 vorhanden sind, muss die Strahlausbreitung in der seitlichen Richtung nicht eingeschränkt werden.

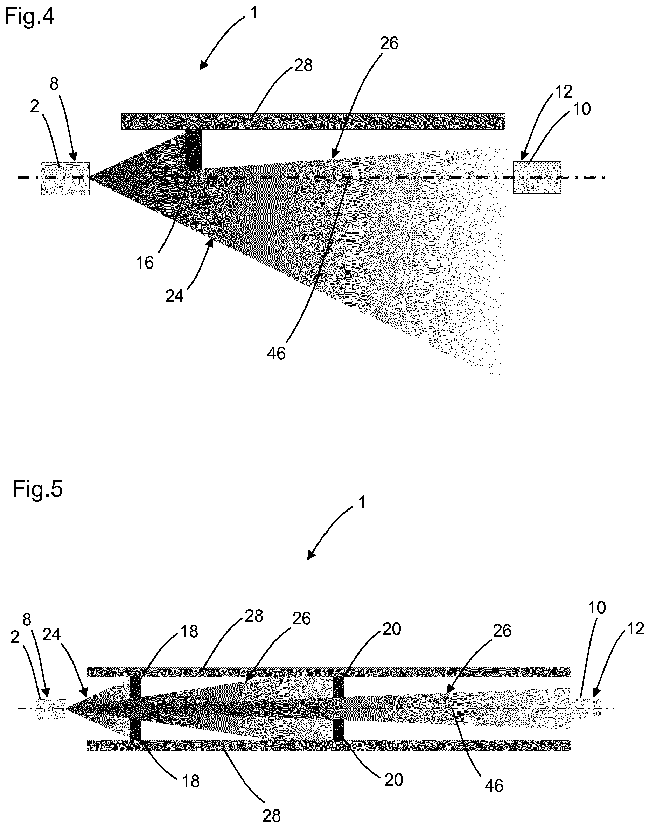

Wie Figur 4 zeigt, ist bei einfachen spiegelnden Flächen 28 eine einseitige Blende 16 auf der Seite der spiegelnden Fläche 28 ausreichend.

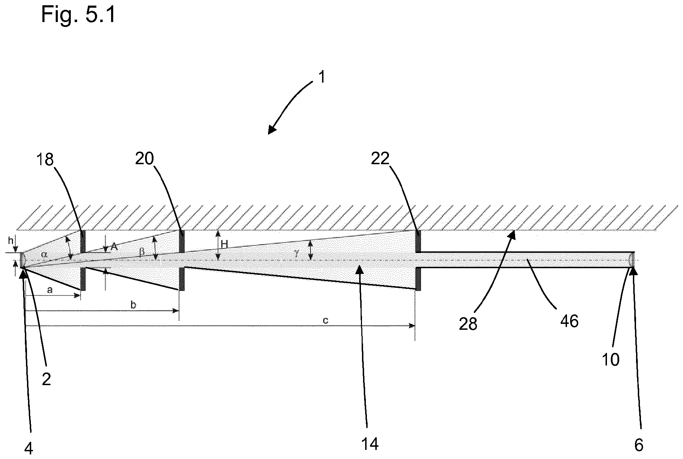

Figur 5 zeigt eine Anordnung einer ersten Blende 18 und von Mehrfachblenden. Gemäß Figur 5 müssen bei Applikationen oder Anwendungen mit hoher Reichweite oder bei spiegelnden Flächen 28, die sehr nah zur optischen Achse 46 liegen, mehrere nacheinander liegende Blenden 18 und 20 verwendet werden.

Figur 5.1 zeigt einen Sensor mit wenigstens einem Sender 2 und einer ersten Sensoroptik 4 in einem ersten Sensorgehäuse und wenigstens einem Empfänger 10 und einer zweiten Sensoroptik 6 in einem zweiten Sensorgehäuse, wobei Lichtstrahlen 14 von dem Sender 2 ausgesandt werden und von dem Empfänger 10 empfangen werden, mit einer reflektierenden Fläche 28, wobei zwischen dem ersten Sensorgehäuse und dem zweiten Sensorgehäuse und beabstandet vom ersten Sensorgehäuse und beabstandet vom zweiten Sensorgehäuse mindestens eine Blende 18 zur Begrenzung der Lichtstrahlen 14 angeordnet ist, wobei der Abstand a der Blende 18 von der Sensoroptik 4, 6 sich nach der Formel a = H-h/tan α errechnet, wobei H den Abstand der optischen Achse 46 zu der reflektierenden Fläche 28 bezeichnet, h die halbe Öffnung der Sensoroptik 4, 6 bezeichnet, und α den halben Öffnungswinkel des Sensors 1 bezeichnet.

Gemäß Figur 5.1 sind neben einer ersten Blende 18 eine zweite Blende 20 oder dritte Blende 22 hintereinander entlang der Lichtstrahlen angeordnet. Durch diese Blenden 18, 20 und 22 können gemäß der Erfindung auftretende Umspiegelungen über eine große Strecke hinweg verhindert werden.

Eine Umspiegelung kann verhindert werden, wenn folgende Anordnung der Blenden 18, 20 und 22 berücksichtigt wird:
Der Abstand b der zweiten Blende 20 von der Sensoroptik 4 berechnet sich nach der Formel b = H +h/tan β, mit β = arctan (A + 2h/2a), wobei H den Abstand der optischen Achse 46 zur reflektierenden Fläche 28 bezeichnet, h die halbe Öffnung der Sensoroptik 4 bezeichnet, β den halben Öffnungswinkel nach der ersten Blende 18 bezeichnet, A die Öffnung der ersten Blende 18 bezeichnet und a den Abstand der ersten Blende 18 von der Sensoroptik 4 bezeichnet.

Weiter berechnet sich der Abstand c der dritten Blende 22 von der Sensoroptik 4 nach der Formel c = H +h/tan γ mit γ = arctan (A + 2h/2b), wobei H den Abstand der optischen Achse 46 zur reflektierenden Fläche 28 bezeichnet, h die halbe Öffnung der Sensoroptik 4 bezeichnet, γ den halben Öffnungswinkel nach der zweiten Blende 20 bezeichnet, A die Öffnung der ersten Blende 18 bezeichnet und b den Abstand der zweiten Blende 20 von der Sensoroptik 4 bezeichnet.

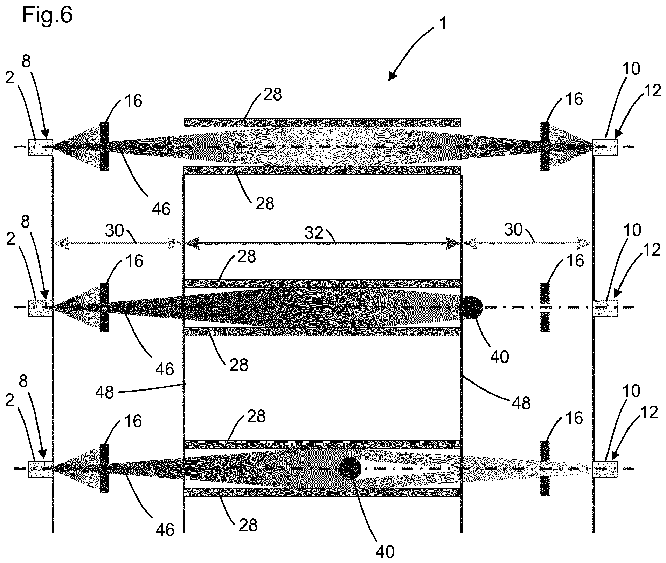

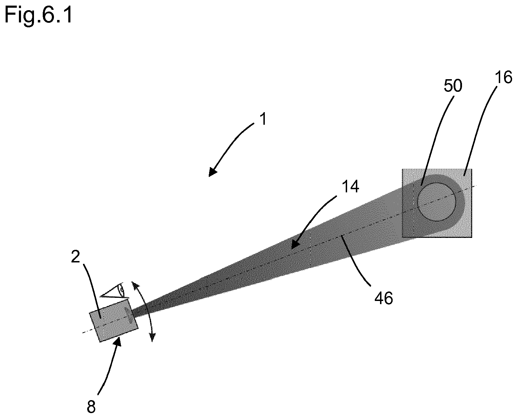

Figur 6 zeigt einen Sensor 1 mit mechanischen Barrieren 48 und zwei Blenden 16. Falls einzelne Bereiche im Überwachungsbereich angegeben werden können, in denen die Objekte 40 in den Überwachungsbereich gelangen, können diese Bereiche auf einfache Weise durch Blenden 16 umspiegelsicher gestaltet werden. Die verbleibenden nicht umspiegelsicheren Bereiche müssen dann z. B. durch mechanische Barrieren 48 abgesichert werden. Figur 6 zeigt eine solche Anwendung. Die umspiegelsicheren Bereiche 30 sind mit Pfeilen gekennzeichnet. Ein Objekt 40 im Bereich 30 des Überwachungsbereichs wird trotz Umspiegelung sicher detektiert. Dieser Fall ist in der Bildmitte dargestellt. Ein Objekt 40 im Bereich 32 des Überwachungsbereiches wird umspiegelt und nicht erkannt. Dies ist im unteren Teil der Figur dargestellt.

Figur 6.1 zeigt einen Sender 2 eines Sensors 1 mit einer Blende 16, welche eine Reflexionsfolie 50 aufweist. Arbeitet der Sender 2 im sichtbaren Spektralbereich, kann die Ausrichtung des Senders 2 durch den Einsatz retroreflektierender Oberflächen bzw. der Reflexionsfolie 50 an den Blenden 16 erleichtert werden. Dabei wird mit bloßem Auge, hier als Beobachtungsauge dargestellt, eine Reflexion von der Reflexionsfolie 50 ausgewertet.

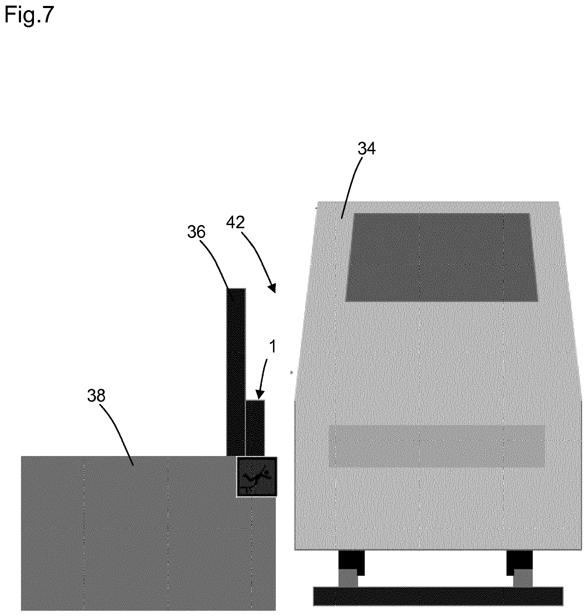

Figur 7 zeigt eine Anwendung bzw. Applikation, nämlich ein Türenzugangssystem 36 an einem Bahnsteig 38. Derartige Türenzugangsysteme 36 schützen wartende Personen vor dem einfahrenden Zug oder Schienenfahrzeug 34. Durch die Türenzugangssysteme 36, deren Türen beim Einfahren des Zuges geschlossen sind, wird verhindert, dass Personen absichtlich oder unabsichtlich auf die Gleise gelangen. Ist der Zug eingefahren, öffnen sich die Türen des Türenzugangssystems 36 und die Personen können in den Zug einsteigen. Die Türen des Türenzugangssystems 36 weisen gleiche Abstände wie die Zugtüren auf. Entlang der optischen Achse der vorgesehenen Lichtschranke oder des Lichtgitters befinden sich dabei mehrere Türen, die durch die Lichtschranke oder das Lichtgitter gleichzeitig abgesichert werden.

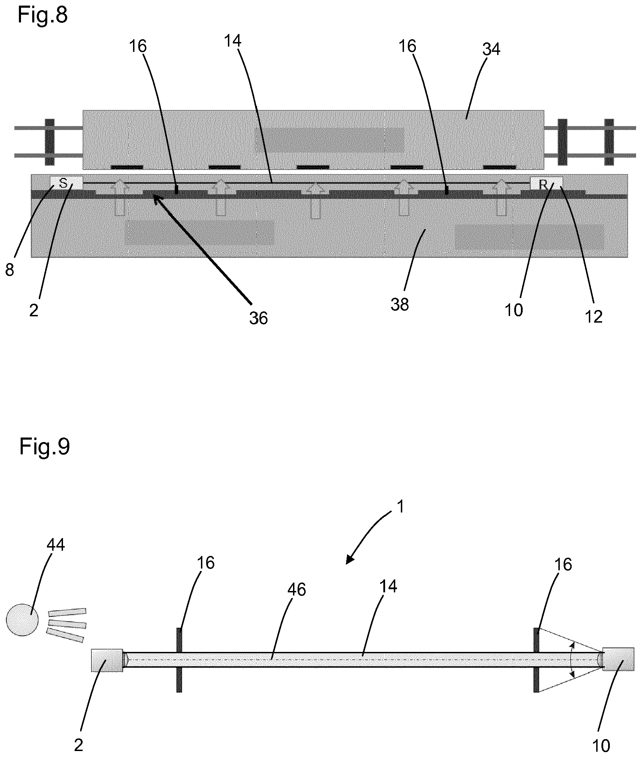

Figur 8 zeigt einen Sensor zur Absicherung eines Türenzugangssystems eines Bahnsteigs mit mehreren Türen mit wenigstens einem Sender 2 und einer ersten Sensoroptik in einem ersten Sensorgehäuse 8 und wenigstens einem Empfänger und einer zweiten Sensoroptik in einem zweiten Sensorgehäuse 12, wobei Lichtstrahlen 14 von dem Sender 2 ausgesandt werden und von dem Empfänger 10 empfangen werden, wobei zwischen dem ersten Sensorgehäuse 8 und dem zweiten Sensorgehäuse 12 und beabstandet vom ersten Sensorgehäuse 8 und beabstandet vom zweiten Sensorgehäuse 12 mindestens eine Blende 16 an dem Türenzugangssystem zur Begrenzung der Lichtstrahlen angeordnet ist.

Der gezielte Einsatz von Blenden 16 ist besonders bei großen Distanzen mit ortsfesten spiegelnden Flächen in unmittelbarer Nähe zur optischen Achse sinnvoll. Diese Bedingungen findet man bei der Lücken-Überwachung an Bahnsteigkanten mit Türenzugangssystemen 36 auf Bahnsteigen 38 oder allgemein bei der Flurüberwachung mit Reflexionen an Glastüren. Durch die Sensoren wird die Lücke 42 zwischen Türenzugangssystem 36 und Zug bzw. Schienenfahrzeug 34 überwacht. Figur 7 und Figur 8 zeigt den prinzipiellen Aufbau.

Die gemäß Figur 9 gezeigte Anwendung bzw. Applikation befindet sich meist im Außen- oder Outdoor-Bereich. Für eine hohe Verfügbarkeit des Sensors 1 ist das Gehäuse des Sensors so gestaltet, dass ein direkter Beschlag durch Regen oder Schnee sowie die Vereisung der optischen Flächen durch ausreichenden Gehäuseüberstand verhindert wird. Des Weiteren führt direkte Sonneneinstrahlung auf dem Empfänger 10 des optischen Sensors 1 häufig zum Verlust der Verfügbarkeit. Die direkte Sonneneinstrahlung kann sehr effektiv durch die Blenden 16 verhindert werden, wie in Figur 9 gezeigt ist. Zusätzlich kann durch aktive Klimatisierung des Sensors 1 ein Beschlag der optischen Flächen durch kondensierende Luftfeuchtigkeit vermieden werden.

### Bezugszeichen:

- 1: Sensor
- 2: Sender
- 4, 6: Sensoroptik
- 8: erstes Sensorgehäuse
- 10: Empfänger
- 12: zweites Sensorgehäuse
- 14: Lichtstrahlen
- 16: Blende
- 18: erste Blende
- 20: zweite Blende
- 22: dritte Blende
- 24: Sendekeule
- 26: reduzierte Sendekeule
- 28: reflektierende Fläche
- 30: grüner Bereich
- 32: roter Bereich
- 34: Schienenfahrzeug
- 36: Türenzugangssystem
- 38: Bahnsteig
- 40: Objekt
- 42: Lücke
- 44: Sonne
- 46: optische Achse
- 48: mechanische Barriere
- 50: Reflexfolie

- A: Öffnung der Blende
- h: halbe Öffnung der Sensoroptik
- H: Abstand der optischen Achse zur reflektierenden Fläche
- α: halber Öffnungswinkel des Sensors
- β: halber Öffnungswinkel nach der ersten Blende
- γ: halber Öffnungswinkel nach der zweiten Blende

## Patentansprüche

1. Sensor mit wenigstens einem Sender (2) und einer ersten Sensoroptik (4) in einem ersten Sensorgehäuse (8) und wenigstens einem Empfänger (10) und einer zweiten Sensoroptik (6) in einem zweiten Sensorgehäuse (12), wobei Lichtstrahlen (14) von dem Sender (2) ausgesandt werden und von dem Empfänger (10) empfangen werden, mit einer reflektierenden Fläche (28) parallel zur optischen Achse (46) des Senders (2) und des Empfängers (10),
wobei zwischen dem ersten Sensorgehäuse (8) und dem zweiten Sensorgehäuse (12) und beabstandet und räumlich getrennt vom ersten Sensorgehäuse (8) und beabstandet und räumlich getrennt vom zweiten Sensorgehäuse (12) mindestens eine Blende an einer anderen Stelle als der Sensor (16, 18) zur Begrenzung der Lichtstrahlen (14) angeordnet ist, **dadurch gekennzeichnet, dass** der Abstand a der Blende (16, 18) von der Sensoroptik (4, 6) sich nach der Formel a = H-h/tan α errechnet, wobei H den Abstand der optischen Achse (46) zu der reflektierenden Fläche (28) bezeichnet, h die halbe Öffnung der Sensoroptik (4, 6) bezeichnet, und α den halben Öffnungswinkel des Sensors (1) bezeichnet, wobei die Blende nur auf einer Seite der optischen Achse (46) zwischen Sender (2) und Empfänger (10) angeordnet ist, wobei die Lichtstrahlen (14) auf einer Seite der optischen Achse (46) durch die Blende (16, 18) begrenzt werden und auf der gegenüberliegenden Seite nicht begrenzt werden.

2. Sensor nach einem der vorhergehenden Ansprüche, **dadurch gekennzeichnet, dass** neben der ersten Blende (18) eine zweite Blende (20) oder dritte Blende (22) hintereinander entlang der Lichtstrahlen (14) angeordnet sind.

3. Sensor nach Anspruch 2, **dadurch gekennzeichnet, dass** der Abstand b der zweiten Blende (20) von der Sensoroptik (4, 6) sich nach der Formel b = H +h/tan β berechnet, mit β = arctan (A + 2h/2a), wobei H den Abstand der optischen Achse (46) zur reflektierenden Fläche (28) bezeichnet, h die halbe Öffnung der Sensoroptik (4, 8) bezeichnet, β den halben Öffnungswinkel nach der ersten Blende (18) bezeichnet, A die Öffnung der ersten Blende (18) bezeichnet und a den Abstand der ersten Blende (18) von der Sensoroptik (4, 6) bezeichnet.

4. Sensor nach einem der vorhergehenden Ansprüche 2 bis 3 **dadurch gekennzeichnet, dass** der Abstand c der dritten Blende (22) von der Sensoroptik (4, 6) sich nach der Formel c = H +h/tan γ berechnet mit γ = arctan (A + 2h/2b), wobei H den Abstand der optischen Achse (46) zur reflektierenden Fläche (28) bezeichnet, h die halbe Öffnung der Sensoroptik (4, 6) bezeichnet, γ den halben Öffnungswinkel nach der zweiten Blende (20) bezeichnet, A die Öffnung der ersten Blende (18) bezeichnet und b den Abstand der zweiten Blende (20) von der Sensoroptik (4, 6) bezeichnet.

5. Sensor nach einem der vorhergehenden Ansprüche zur Absicherung eines Türenzugangssystems eines Bahnsteigs mit mehreren Türen, wobei mindestens eine Blende (16, 18) an dem Türenzugangssystem zur Begrenzung der Lichtstrahlen (14) angeordnet ist.

6. Sensor nach einem der vorhergehenden Ansprüche, **dadurch gekennzeichnet, dass** der Sensor (1) durch ein Lichtgitter gebildet ist mit einer Mehrzahl von Sendern und/oder Empfängern in dem ersten Sensorgehäuse, und einer Mehrzahl von Empfängern und/oder Sendern in dem zweiten Sensorgehäuse.

## Claims

1. A sensor having at least one transmitter (2) and a first sensor optics (4) in a first sensor housing (8) and having at least one receiver (10) and a second sensor optics (6) in a second sensor housing (12), wherein light beams (14) are transmitted by the transmitter (2) and are received by the receiver (10), having a reflective surface (28) in parallel with the optical axis (46) of the transmitter (2) and of the receiver (10),
wherein at least one diaphragm is arranged between the first sensor housing (8) and the second sensor housing (12) and spaced apart and spatially separate from the first sensor housing (8) and spaced apart and spatially separate from the second sensor housing (12) at a different point than the sensor (16, 18) for restricting the light beams (14), **characterized in that** the spacing a of the diaphragm (16, 18) from the sensor optics (4, 6) is calculated according to the formula a = H - h/tan α, where H is the spacing of the optical axis (46) from the reflective surface (28), h is half the opening of the sensor optics (4, 6), and α is half the opening angle of the sensor (1), with the diaphragm only being arranged at one side of the optical axis (46) between the transmitter (2) and the receiver (10), and with the light beams (14) being restricted on one side of the optical axis (46) by the diaphragm (16, 18) and not being restricted on the oppositely disposed side.

2. A sensor in accordance with the preceding claim, **characterized in that** a second diaphragm (20) or third diaphragm (22) are arranged beside the first diaphragm (18) behind one another along the light beams (14).

3. A sensor in accordance with claim 2, **characterized in that** the spacing b of the second diaphragm (20) from the sensor optics (4, 6) is calculated in accordance with the formula b = H + h/tan β, where β = arctan (A + 2h/2a), where H is the distance of the optical axis (46) from the reflective surface (28), h is half the opening of the sensor optics (4, 8), β is half the opening angle after the first diaphragm (18), A is the opening of the first diaphragm (18), and a is the spacing of the first diaphragm (18) from the sensor optics (4, 6).

4. A sensor in accordance with one of the preceding claims 2 to 3, **characterized in that** the spacing c of the third diaphragm (22) from the sensor optics (4, 6) is calculated in accordance with the formula c = H + h/tan γ, where γ = arctan (A + 2h/2b), where H is the distance of the optical axis (46) from the reflective surface (28), h is half the opening of the sensor optics (4, 8), γ is half the opening angle after the second diaphragm (20), A is the opening of the first diaphragm (18), and b is the spacing of the second diaphragm (20) from the sensor optics (4, 6).

5. A sensor in accordance with any one of the preceding claims for securing a door access system of a railway platform having a plurality of doors, wherein at least one diaphragm (16, 18) is arranged at the door access system to restrict the light beams (14).

6. A sensor in accordance with any one of the preceding claims, **characterized in that** the sensor (1) is formed by a light grid having a plurality of transmitters and/or receivers in the first sensor housing, and having a plurality of receivers and/or transmitters in the second sensor housing.

## Revendications

1. Capteur comportant au moins un émetteur (2) et une première optique de capteur (4) dans un premier boîtier de capteur (8) et au moins un récepteur (10) et une seconde optique de capteur (6) dans un second boîtier de capteur (12), des rayons lumineux (14) étant émis par l'émetteur et reçus par le récepteur (10), comportant une surface réfléchissante (28) parallèle à l'axe optique (46) de l'émetteur (2) et du récepteur (10),
dans lequel, entre le premier boîtier de capteur (8) et le second boîtier de capteur (12), au moins un cache est agencé à un autre endroit que le capteur (16, 18) en étant écarté et spatialement séparé du premier boîtier de capteur (8) et en étant écarté et spatialement séparé du second boîtier de capteur (12), en vue de limiter les rayons lumineux (14),
**caractérisé en ce que**
la distance a du cache (16, 18) vis-à-vis de l'optique de capteur (4, 6) se calcule selon la formule a = H - h / tan α, H désignant la distance de l'axe optique (46) par rapport à la surface réfléchissante (28), h désignant la moitié de l'ouverture de l'optique de capteur (4, 6), et α désignant la moitié de l'angle d'ouverture du capteur (1), et le cache n'est agencé que sur un côté de l'axe optique (46) entre l'émetteur (2) et le récepteur (10), les rayons lumineux (14) étant limités sur un côté de l'axe optique (46) par le cache (16, 18) et n'étant pas limités sur le côté opposé.

2. Capteur selon la revendication précédente, **caractérisé en ce qu'**il est prévu, à côté du premier cache (18), un second cache (20) ou un troisième cache (22) l'un derrière l'autre le long des rayons lumineux (14).

3. Capteur selon la revendication 2, **caractérisé en ce que** la distance b du second cache (20) vis-à-vis de l'optique de capteur (4, 6) se calcule selon la formule b = H + h / tan β, avec β = arctan (A + 2h / 2a), H désignant la distance de l'axe optique (46) par rapport à la surface réfléchissante (28), h désignant la moitié de l'ouverture de l'optique de capteur (4, 6), et β désignant la moitié de l'angle d'ouverture après le premier cache (18), A désignant l'ouverture du premier cache (18) et a désignant la distance du premier cache (18) vis-à-vis de l'optique de capteur (4, 6).

4. Capteur selon l'une des revendications précédentes 2 à 3, **caractérisé en ce que** la distance c du troisième cache (22) vis-à-vis de l'optique de capteur (4, 6) se calcule selon la formule c = H + h / tan γ, avec γ = arctan (A + 2h / 2b), H désignant la distance de l'axe optique (46) par rapport à la surface réfléchissante (28), h désignant la moitié de l'ouverture de l'optique de capteur (4, 6), γ désignant la moitié de l'angle d'ouverture après le second cache (20), A désignant l'ouverture du premier cache (18) et b désignant la distance du second cache (20) vis-à-vis de l'optique de capteur (4, 6).

5. Capteur selon l'une des revendications précédentes pour sécuriser un système d'accès à portes d'un quai ferroviaire comportant plusieurs portes, dans lequel au moins un cache (16, 18) est agencé sur le système d'accès à portes pour limiter les rayons lumineux (14).

6. Capteur selon l'une des revendications précédentes,
**caractérisé en ce que**
le capteur (1) est formé par une grille lumineuse avec une pluralité d'émetteurs et/ou de récepteurs dans le premier boîtier de capteur et une pluralité de récepteurs et/ou d'émetteurs dans le second boîtier de capteur.
